# EUROPÄISCHE PATENTANMELDUNG

(11) **EP 1 211 455 A1**
(43) Veröffentlichungstag der Anmeldung: **05.06.2002**
(21) Anmeldenummer: 01890320.3
(22) Anmeldetag: 15.11.2001
(51) Int. Cl.: F16N 37/02

(54) **Vorrichtung zum Füllen einer Fettpresse**

(30) Priorität: 01.12.2000 AT 8812000 U
(71) Anmelder: Böckle, Harald, 3350 Haag (AT)
(72) Erfinder: Böckle, Harald, 3350 Haag (AT)
(74) Vertreter: Hübscher, Heiner, Dipl.-Ing.

(57) **Zusammenfassung**

Es wird eine Vorrichtung zum Füllen einer Fettpresse, die einen Zylinder (1) und einen über eine Kolbenstange (6) von Hand in den Zylinder (1) einziehbaren Austriebskolben (2) aufweist, mit einem Vorratsbehälter (9) und mit einer auf einen Fettvorrat (10) im Vorratsbehälter (9) aufsetzbaren, an den Behältermantel anschließenden Druckscheibe (11) beschrieben, die eine mittige Durchtrittsöffnung (12) mit einer Erweiterung zum stirnseitigen Ansetzen des Zylinders (1) der Fettpresse bildet. Um vorteilhafte Konstruktionsbedingungen zu schaffen, wird vorgeschlagen, daß die Erweiterung aus einem sich von der Durchtrittsöffnung (12) weg öffnenden Anschlußkonus (14) besteht.

## Beschreibung

Die Erfindung bezieht sich auf eine Vorrichtung zum Füllen einer Fettpresse, die einen Zylinder und einen über eine Kolbenstange von Hand in den Zylinder einziehbaren Austriebskolben aufweist, mit einem Vorratsbehälter und mit einer auf einen Fettvorrat im Vorratsbehälter aufsetzbaren, an den Behältermantel anschließenden Druckscheibe, die eine mittige Durchtrittsöffnung mit einer Erweiterung zum stirnseitigen Ansetzen des Zylinders der Fettpresse bildet.

Um den Zylinder von Fettpressen über den zum Austreiben des Fettes vorgesehenen, üblicherweise federbelasteten Kolben bei abgenommenem Kopf mit Hilfe des Austriebskolbens füllen zu können, ist es bekannt (US 5 469 897 A), auf den Fettvorrat in einem Vorratsbehälter eine Druckscheibe aufzusetzen, die dichtend an den Behältermantel anschließt und einen mittigen axialen Ansatz mit einer Durchtrittsöffnung für den Fettdurchtritt aufweist. Die Durchtrittsöffnung ist im Bereich des axialen Ansatzes erweitert, so daß sich im Übergangsbereich von der Erweiterung zur weiterführenden Durchtrittsöffnung eine einspringende Schulter ergibt, an die der Zylinder der Fettpresse angesetzt werden kann. Damit im Bereich dieser Schulter kein Fett in die Erweiterung austreten und dadurch den Zylinder außen verschmutzen kann, ist innerhalb der Erweiterung eine Ringdichtung angeordnet, die über eine zur einspringenden Schulter konisch abfallende Anlauffläche radial an den Zylinder angedrückt wird, wenn diese Ringdichtung mit Hilfe einer den axialen Ansatz der Druckscheibe übergreifenden Schraubkappe in die Erweiterung eingedrückt wird. Durch ein Zurückziehen des Austriebskolbens über eine mit einem entsprechenden Handgriff versehene Kolbenstange kann dann der Zylinder mit Fett gefüllt werden, wobei die über den Zylinder aufgebrachte Druckbelastung der Druckscheibe Fett aus dem Fettvorrat durch die Durchtrittsöffnung von unten nach oben drückt, während das Fett zugleich über den Austriebskolben in den Zylinder angesaugt wird. Nachteilig bei dieser bekannten Vorrichtung zum Füllen einer Fettpresse ist einerseits der mit dem Abdichten des Zylinders in der Erweiterung des Ansatzes der Druckscheibe verbundene Aufwand und anderseits die trotz der Abdichtung gegebene Verschmutzungsgefahr durch aus der Durchtrittsöffnung austretendes Fett. In diesem Zusammenhang ist zu bedenken, daß aufgrund der Fertigungstoleranzen der Zylinder selbst bei einer einheitlichen Baugröße der Fettpressen mit entsprechenden Durchmesserunterschieden bei den Zylindern gerechnet werden muß, wozu noch kommt, daß die wirksame Abdichtung der Zylinder in der Erweiterung des Ansatzes der Druckscheibe von der Beaufschlagung der Ringdichtung und damit vom Anzugsmoment der Schraubkappe abhängt.

Der Erfindung liegt somit die Aufgabe zugrunde, eine Vorrichtung zum Füllen einer Fettpresse der eingangs geschilderten Art so auszugestalten, daß ohne aufwendige Abdichtung in einfacher Weise eine Füllung des Zylinders der Fettpresse möglich wird, ohne eine störende Verschmutzung insbesondere der Außenseite des Zylinders durch austretendes Fett befürchten zu müssen.

Die Erfindung löst die gestellte Aufgabe dadurch, daß die Erweiterung aus einem sich von der Durchtrittsöffnung weg öffnenden Anschlußkonus besteht.

Durch das Vorsehen eines Anschlußkonus zum stirnseitigen Ansetzen des Zylinders einer Fettpresse kann in einfacher Weise eine ausreichend dichte Verbindung zwischen der Druckscheibe und dem Zylinder unabhängig vom jeweiligen Istdurchmesser des Zylinders erreicht werden, um einen die Zylinderaußenseite verschmutzenden Fettaustritt zwischen dem Anschlußkonus und der Stirnseite des Zylinders zu vermeiden. Es hat sich nämlich in überraschender Weise herausgestellt, daß selbst bei einem exzentrischen Ansetzen des Zylinders an den Anschlußkonus durch die beim Füllen des Zylinders auftretenden Kräfte eine ausreichende Zentrierung stattfindet, so daß über den von Hand aus zurückzuziehenden Austriebskolben ein einfaches Ansaugen des durch die Durchtrittsöffnung der Druckscheibe aufsteigenden Fettes möglich wird, ohne daß vorher aufwendige Abdichtungen vorgenommen werden müssen.

Da beim Abheben des Zylinders vom Anschlußkonus die sich durch die Durchtrittsöffnung in den Zylinder erstreckende Fettsäule unkontrolliert abreißt, kann sich die Notwendigkeit ergeben, überschüssiges Fett vom Zylinder abzustreifen. Dies gelingt mit einfachen Mitteln, wenn der Anschlußkonus auf der der Durchtrittsöffnung gegenüberliegenden Seite in einen zylindrischen, eine Abstreifkante bildenden Öffnungsabschnitt mündet. Der Zylinder braucht somit nach dem Füllen nur kurz vom Anschlußkonus abgehoben und dann seitlich mit seiner Stirnfläche über die Abstreifkante gezogen zu werden, um im Anschluß daran den Kopf der Fettpresse auf den mit Fett gefüllten Zylinder verschmutzungsfrei aufsetzen zu können.

Liegt der Anschlußkonus zwischen den Deckflächen der Druckscheibe, so wird eine einfache Konstruktion halten, weil sich Ansätze an der Druckscheibe erübrigen. Außerdem können günstige Bedingungen hinsichtlich des Kraftangriffes an der Druckscheibe beim Füllen des Zylinders sichergestellt werden, wodurch ein Verkanten der auf den Fettvorrat aufgesetzten Druckscheibe erschwert. Dazu kommt eine einfache Reinigungsmöglichkeit der Druckscheibe gerade im Bereich des Anschlußkonus.

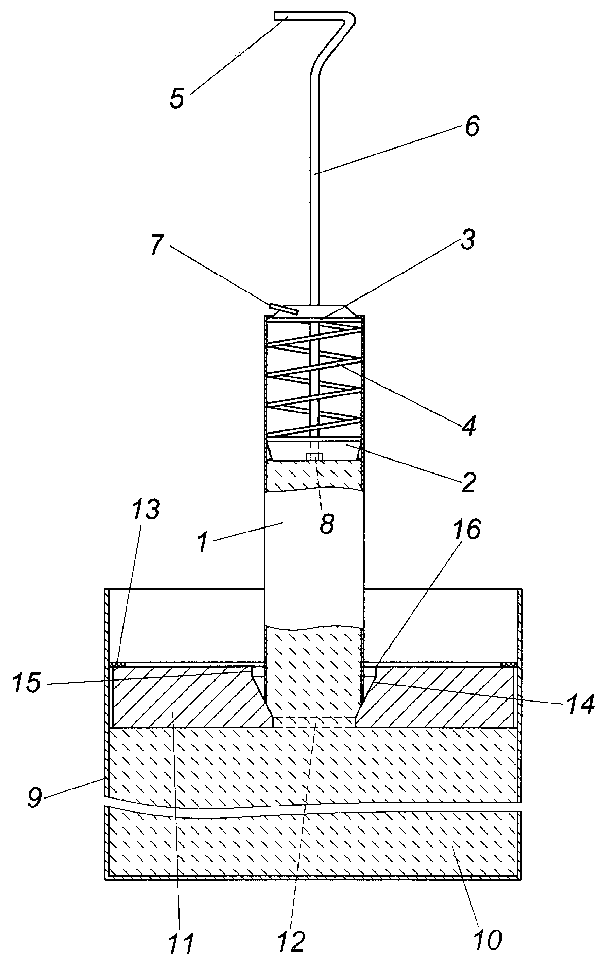

In der Zeichnung ist der Erfindungsgegenstand beispielsweise dargestellt, und zwar wird eine erfindungsgemäße Vorrichtung zum Füllen einer Fettpresse in einem schematischen Längsschnitt gezeigt.

Gemäß dem dargestellten Ausführungsbeispiel weist der Zylinder 1 einen Austriebskolben 2 auf, der mit Hilfe einer sich an einem Boden 3 des Zylinders 1 abstützenden Druckfeder 4 belastet wird. Durch den Austriebskolben 2 und den lose in den Zylinder 1 eingesetzten Boden 3 ist eine mit einem Handgriff 5 versehene Kolbenstange 6 geführt, deren Verriegelung mit dem Boden 3 über einen Hebel 7 gelöst werden kann. Durch einen Mitnehmeranschlag 8 kann der Austriebskolben 2 gegen die Kraft der Feder 4 in den Zylinder 1 eingezogen werden. Da die Kolbenstange 6 bei gefülltem Zylinder 1 durch den Austriebskolben 2 in den Zylinder 1 frei vorgeschoben werden kann, ist beispielsweise zum Entleeren des Zylinders 1 die Feder 4 durch ein Einziehen des Austriebskolbens 2 in den Zylinder 1 entsprechend vorzuspannen, bevor aufgrund der Verriegelung zwischen Kolbenstange 6 und Boden 3 der Austriebskolben 2 beim Einschieben der Kolbenstange 6 in den Zylinder 1 über die vorgespannte Feder 4 mitgenommen werden kann.

Die Vorrichtung zum Füllen des Zylinders 1 besteht aus einem Vorratsbehälter 9, auf dessen Fettvorrat 10 eine Druckscheibe 11 mit einer mittigen Durchtrittsöffnung 12 aufgesetzt ist. Diese an den Behältermantel anschließende Druckscheibe 11 kann mit einer Dichtung 13 für den Behältermantel versehen sein. Im Gegensatz zu herkömmlichen Vorrichtungen dieser Art ist die zum stirnseitigen Ansetzen des Zylinders 1 vorgesehene Erweiterung der Durchtrittsöffnung 12 als Anschlußkonus 14 ausgebildet, an den auf der der Durchtrittsöffnung 12 gegenüberliegenden Seite ein zylindrischer Öffnungsabschnitt 15 anschließt, der mit der oberen Deckfläche der Druckscheibe 11 eine Abstreifkante 16 bildet.

Wird nun der Zylinder 1 nach einem Abnehmen des Kopfes der Fettpresse mit seiner kopfseitigen Stirnseite an den Anschlußkonus 14 angesetzt, so ergibt sich eine vom Durchmesser des Zylinders 1 unabhängige Anlage der Stirnseite des Zylinders 1 am Anschlußkonus 14, wobei aufgrund der seitlichen Führung des Zylinders 1 durch den Anschlußkonus 14 eine ausreichende Zentrierung des Zylinders 1 innerhalb des Anschlußkonus 14 erfolgt, um beim Füllvorgang einen Fettaustritt zwischen dem Zylinder 1 und dem Anschlußkonus 14 wirksam zu unterbinden. Das Füllen des Zylinders 1 erfolgt mit Hilfe des Austriebskolbens 2, der über die Kolbenstange 6 aus seiner kopfseitigen Endlage in den Zylinder 1 eingezogen wird und dabei Fett durch die Durchtrittsöffnung 12 in den Zylinder 1 ansaugt. Dieser Füllvorgang wird durch die auf die Druckscheibe 11 übertragenen Druckkräfte unterstützt, die das Fett von unten in die Durchtrittsöffnung 12 drücken. In diesem Zusammenhang ist zu berücksichtigen, daß beim Einziehen des Austriebskolbens 2 gegen die Kraft der Feder 4 über die den Zylinder 1 haltende Hand eine Druckkraft ausgeübt wird, die der auf die Kolbenstange 6 durch die andere Hand ausgeübten Zugkraft entgegenwirkt. Nach dem Füllen des Zylinders 1 wird dieser vom Anschlußkonus 13 abgehoben und seitlich über die Abstreifkante 16 bewegt, um überschüssiges Fett abstreifen zu können. Danach kann der Kopf der Fettpresse aufgesetzt und allenfalls mit dem Fett angesaugte Luft aus dem Zylinder 1 ausgetrieben werden, bevor die Fettpresse nach einem Einschieben der Kolbenstange 6 in den Zylinder 1 betriebsbereit wird. Beim Öffnen einer Austrittsdüse des Kopfes drückt der federbelastete Austriebskolben 2 das Fett aus dem Zylinder durch die Austrittsdüse.

## Patentansprüche

1. Vorrichtung zum Füllen einer Fettpresse, die einen Zylinder (1) und einen über eine Kolbenstange (6) von Hand in den Zylinder (1) einziehbaren Austriebskolben (2) aufweist, mit einem Vorratsbehälter (9) und mit einer auf einen Fettvorrat (10) im Vorratsbehälter (9) aufsetzbaren, an den Behältermantel anschließenden Druckscheibe (11), die eine mittige Durchtrittsöffnung (12) mit einer Erweiterung zum stirnseitigen Ansetzen des Zylinders (1) der Fettpresse bildet, **dadurch gekennzeichnet, daß** die Erweiterung aus einem sich von der Durchtrittsöffnung (12) weg öffnenden Anschlußkonus (14) besteht.

2. Vorrichtung nach Anspruch 1, **dadurch gekennzeichnet, daß** der Anschlußkonus (14) auf der der Durchtrittsöffnung (12) gegenüberliegenden Seite in einen zylindrischen, eine Abstreifkante (16) bildenden Öffnungsabschnitt (15) mündet.

3. Vorrichtung nach Anspruch 1 oder 2, **dadurch gekennzeichnet, daß** der Anschlußkonus (14) zwischen den Deckflächen der Druckscheibe (11) liegt.
